# EUROPEAN PATENT SPECIFICATION

(11) **EP 1 943 646 B1**
(45) Date of publication and mention of the grant of the patent: **23.05.2012**
(21) Application number: 06793185.7
(22) Date of filing: 04.09.2006
(51) Int. Cl.: G11B 7/08, G11B 7/135, G11B 7/085, G11B 25/04

(54) **FAST OPTICAL RECORDING APPARATUS**
SCHNELLE OPTISCHE AUFZEICHNUNGSVORRICHTUNG
APPAREIL D'ENREGISTREMENT OPTIQUE RAPIDE

(30) Priority: 05.10.2005 EP 05292083; 01.12.2005 EP 05111588
(43) Date of publication of application: 16.07.2008
(73) Proprietor: Thomson Licensing, 92130 Issy-les-Moulineaux (FR)
(72) Inventor: BRUCKERT, Sébastien, 30625 Hannover (DE); LECLAIRE, Alain, F-89550 Hery (FR); RAULIN, Philippe, F-21110 Tart (FR); CATTANEO, Céline, F-21490 Bellefond (FR)
(74) Representative: Schmidt-Uhlig, Thomas
(86) International application number: PCT/EP2006/065967
(87) International publication number: WO 2007/039370

(56) References cited:
- EP-A- 0 360 123
- US-A- 5 828 632
- US-A- 5 930 214
- PATENT ABSTRACTS OF JAPAN vol. 1999, no. 11, 30 September 1999 (1999-09-30) -& JP 11 167762 A (SONY CORP), 22 June 1999 (1999-06-22) cited in the application

## Description

The present invention relates to an apparatus for reading from and/or writing to optical recording media, which is capable of high-speed reading and/or recording.

Nowadays a plurality of devices for reading from and/or writing to optical recording media are available to consumers, e.g. for CD (Compact Disk) or DVD (Digital Versatile Disk). These devices generally allow to read from and/or write to a recording medium with an increased speed using a higher rotation speed of the optical recording medium, e.g. 2X, 4X, 8X etc., where X denotes the nominal speed associated to the recording medium. While reading can generally be performed at even higher rotation speeds, the rotation speed for recording is still limited by the available recording media. For recording a two hours movie on a DVD a 8X recorder needs approximately 15 minutes. While this is acceptable for a consumer electronics device, there are circumstances where the time needed for recording has to be reduced even more. For example, US 2004/0064377 discloses a Kiosk machine that allows customers to browse a movie database, view movie descriptions, and then have a copy of the movie recorded on a DVD disk. For such a system a recording time of approximately one minute is desirable.

Instead of or in addition to using an increased rotation speed, it has been proposed for example in JP 11-167762 to use multiple pickups for simultaneously accessing different parts of an optical disk. The document does, however, not disclose how to arrange these multiple pickups relative to a motor for rotating the optical disk.

Likewise, EP 0 360 123 discloses a super-large capacity data storage drive. The drive has a plurality of pickups for simultaneously accessing different sides of a plurality of disks. According to one embodiment a disk is accessed by two pickups. The two pickups are located on the same level relative to the disk. However, no specific design of the pickups is described.

US 5,930,214 discloses an optical disk recording or reproducing apparatus compatible with different optical media. The apparatus has a single pickup with a plurality of selectable objective lenses.

US 5,828,632 discloses an optical disk recording or reproducing apparatus. The apparatus has two pickups for simultaneously accessing different parts of a disk. The two pickups are located on the same level relative to the disk. However, no specific design of the pickups is described.

It is an object of the invention to propose an apparatus for reading from and/or writing to optical recording media using multiple pickups.

According to the invention, this object is achieved by an apparatus for reading from and/or writing to optical recording media having at least a first pickup and a second pickup for reading from and/or writing to an optical recording medium, each of the first pickup and the second pickup having an optics body remote from the optical recording medium with a collimating lens for collimating a light beam for reading from and/or writing to the optical recording medium and an actuator next to the optical recording medium with an objective lens for focusing the collimated light beam onto the optical recording medium, the first pickup and the second pickup being movable in a movement direction parallel to a surface of the optical recording medium and perpendicular to a track direction of the optical recording medium within a movement range, wherein a width of the optics body in the movement direction is larger than a width of the actuator in the movement direction, where the actuators of the first pickup and the second pickup are located on the same level relative to the optical recording medium, whereas the optics bodies of to the first pickup and the second pickup are located on different levels relative to the optical recording medium such that the optics body of the first pickup does not interfere with the optics body of the second pickup within the movement range. This arrangement is especially useful if there isn't enough space to place the whole pickups side by side as it makes more space available for the actuators, which can hence be brought very close together. At the same time the performance of the pickup is not affected.

Preferably, the apparatus has four pickups for reading from and/or writing to an optical recording medium, which are arranged crosswise around a motor for rotating an optical recording medium, wherein the movement direction of one of the four pickups is arranged at an angle of 15° within a plane defined by the four pickups with regard to the movement direction of a pickup arranged, on the opposite side of the motor. This solution allows to use four standard pickups without conflicts between the optics bodies of the pickups.

Advantageously, at least two pickups, which have the same movement direction and are located on the same side of a motor for rotating the optical recording medium, are arranged head to tail. This solution has the advantage that two standard pickups can be arranged very close together. Of course, the phase of one of the pickups has to be inverted.

Of course, the above discussed solutions can easily be combined. For example, an apparatus may have two or more pickups, wherein at least two adjacent pickups are arranged head to tail and with their optics bodies located on different levels.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: schematically shows an arrangement of four pickups relative to an optical recording medium,
- Fig. 2: depicts a three-dimensional view of four pickups arranged crosswise relative to a motor,
- Fig. 3: shows a top view with dimensions of the arrangement of Fig. 2,
- Fig. 4: depicts a three-dimensional view of an alternative arrangement of four pickups relative to a motor,
- Fig. 5: shows a top view with dimensions of the arrangement of Fig. 4.
- Fig. 6: schematically shows an arrangement of five pickups relative to an optical recording medium,
- Fig. 7: depicts a three-dimensional view of five pickups arranged relative to a motor,
- Fig. 8: shows a top view with dimensions of the arrangement of Fig. 7,
- Fig. 9: schematically shows an arrangement of six pickups relative to an optical recording medium,
- Fig. 10: depicts a three-dimensional view of six pickups arranged relative to a motor,
- Fig. 11: depicts a top view of the arrangement of Fig. 10,
- Fig. 12: depicts a three-dimensional view of the arrangement of Fig. 10 with a special motor,
- Fig. 13: depicts a three-dimensional view of six pickups with modified optics bodies arranged relative to a motor,
- Fig. 14: schematically shows an arrangement of eight pickups relative to an optical recording medium,
- Fig. 15: depicts a three-dimensional view of eight pickups arranged relative to a motor,
- Fig. 16: shows a top view with dimensions of the arrangement of Fig. 15,
- Fig. 17: shows a three-dimensional view of a pickup with separated optics body and actuator as used in Fig. 15, and
- Fig. 18: depicts a three-dimensional view of two adjacent pickups as used in Fig. 15.

In the following the pickup arrangements are discussed with regard to their writing performance. Of course, the arrangements can likewise be used for reading.

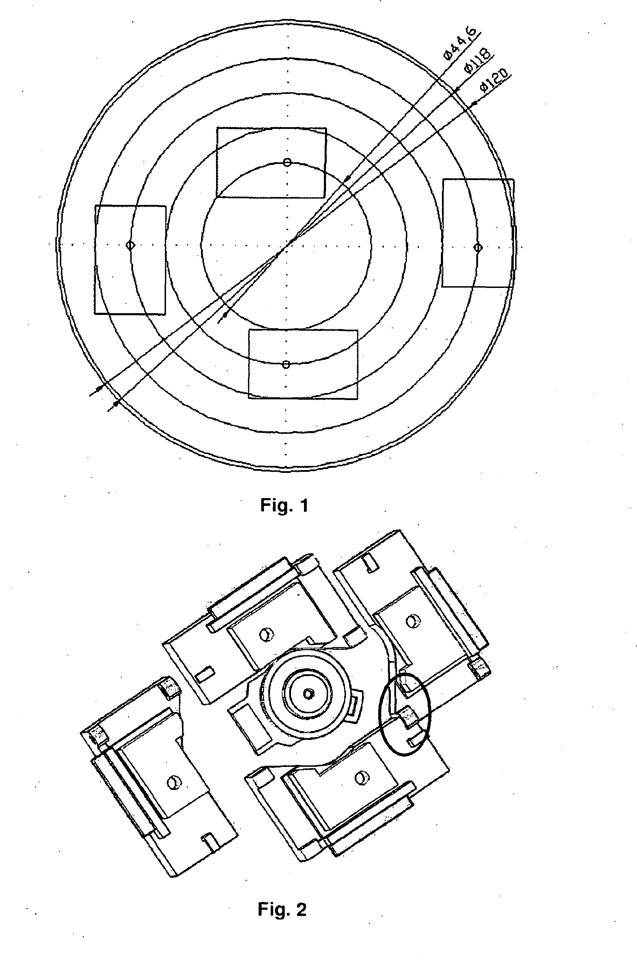

In Fig. 1 an arrangement of four pickups relative to an optical recording medium is shown schematically. Depicted are the four pickups with their respective light spots for reading and/or writing, and an optical recording medium, in this case a DVD. Also shown in the figure are the outer diameter of the optical recording medium (120mm) and the inner and outer diameter of the data area of the optical recording medium (44,6mm and 118mm, respectively). In this arrangement the pitch between the lenses of the different pickups in order to cover the complete data area is 9.18mm. The writing time of a DVD+RW driven at 8X is 2min 30s. The writing time of a DVD+/-R driven at 16X is 1min 15s.

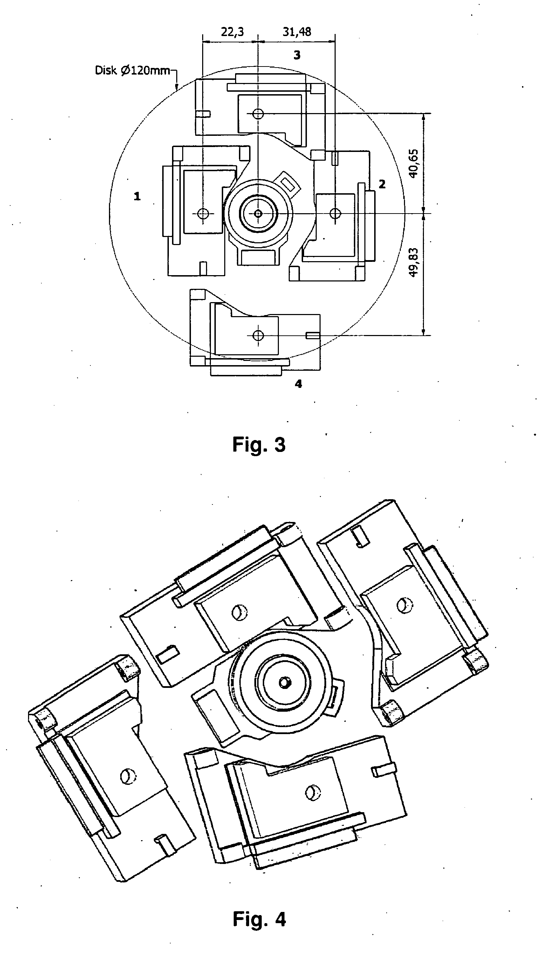

A three-dimensional view of an exemplary arrangement of the four pickups is shown in Fig. 2. A top view with dimensions of this arrangement is depicted in Fig. 3. In this arrangement four standard 16 X pickups are arranged crosswise relative to the motor. Indicated by the ellipse in Fig. 2 is an area where the optics bodies of two pickups interfere. Therefore, a small modification of one optics body is necessary in order to achieve an accessible range from 22.3mm to 59mm.

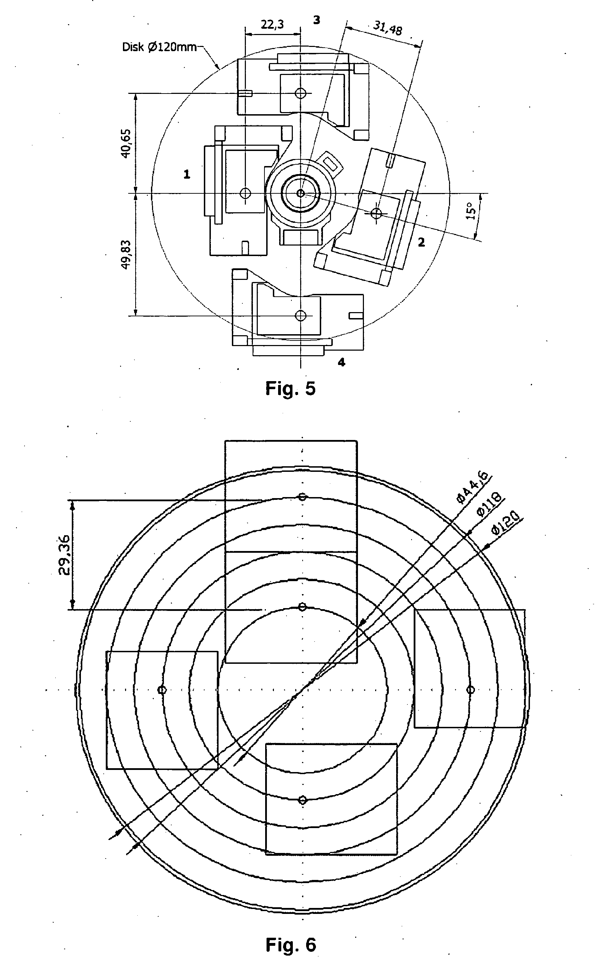

A three-dimensional view of an alternative arrangement of the four pickups is shown in Fig. 4. A top view with dimensions of this arrangement is depicted in Fig. 5. In this arrangement one pickup is arranged at an angle of 15° relative to the axis running through the center of the motor and the light spot of the opposite pickup. In this configuration four standard optical pickups can be employed without modifications.

In Fig. 6 an arrangement of five pickups relative to an optical recording medium is shown schematically. In this arrangement the pitch between the lenses of the different pickups in order to cover the complete data area is 7.34mm. The maximum width of at least the both adjacent pickups is 29.36mm. The writing time of a DVD+RW driven at 8X is 2min. The writing time of a DVD+/-R driven at 16X is 1min.

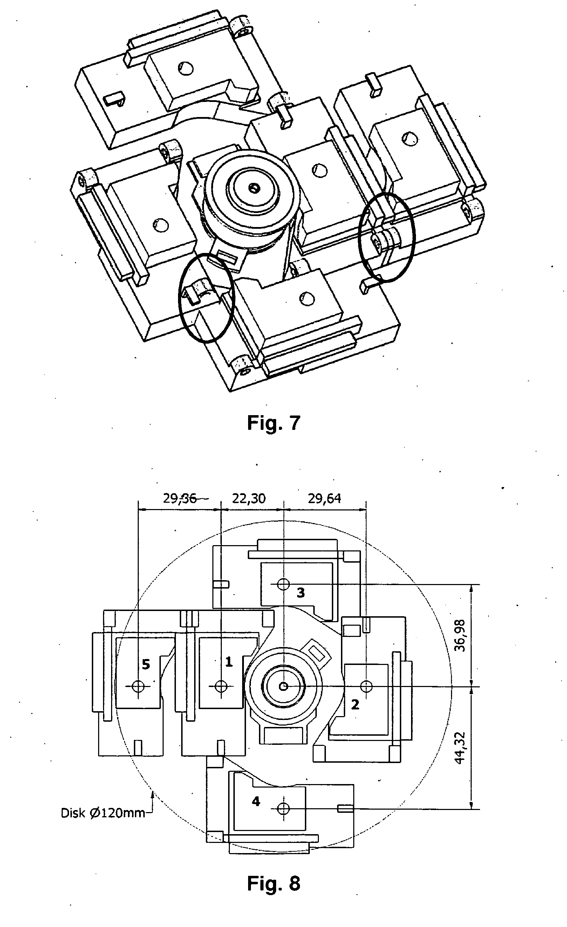

A three-dimensional view of an exemplary arrangement of the five pickups is shown in Fig. 7. A top view with dimensions of this arrangement is depicted in Fig. 8. Two areas where the optics bodies of two pickups interfere are indicated by the ellipses. Therefore, small modifications of two optics bodies are necessary.

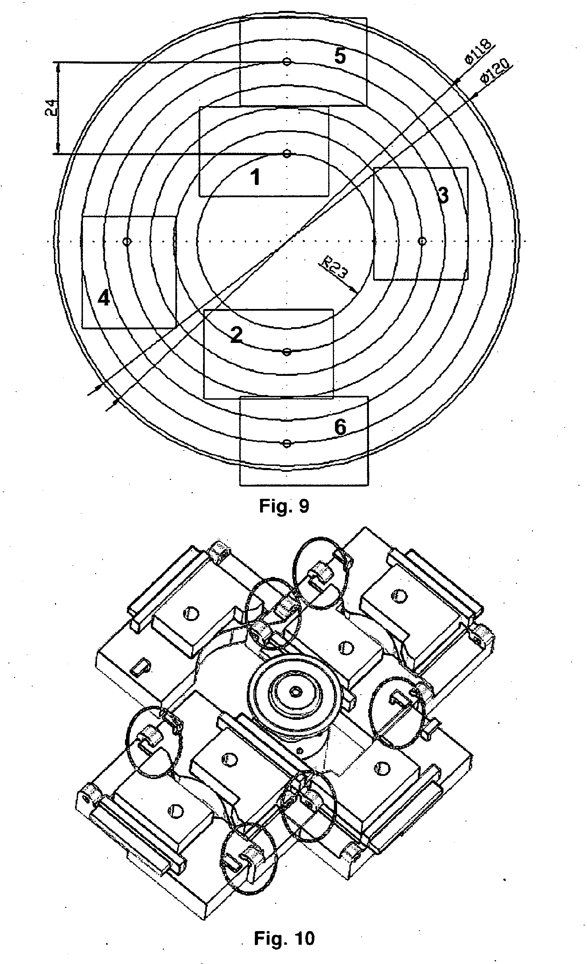

In Fig. 9 an arrangement of six pickups relative to an optical recording medium is shown schematically. In this arrangement the pitch between the lenses of the different pickups in order to cover the complete data area is 6mm. The maximum width of at least the adjoining pickups is 24mm. The writing time of a DVD+RW driven at 8X is 1min 40s. The writing time of a DVD+/-R driven at 16X is 50s.

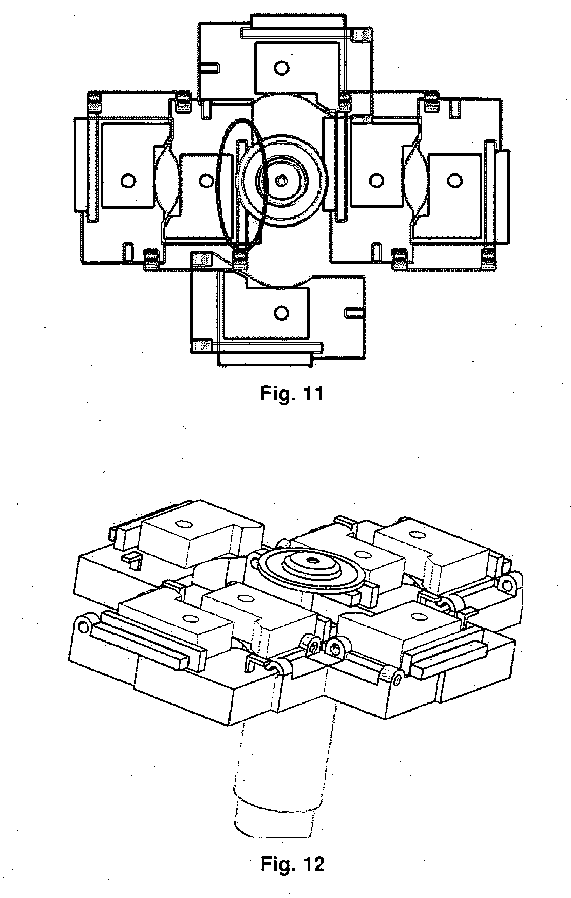

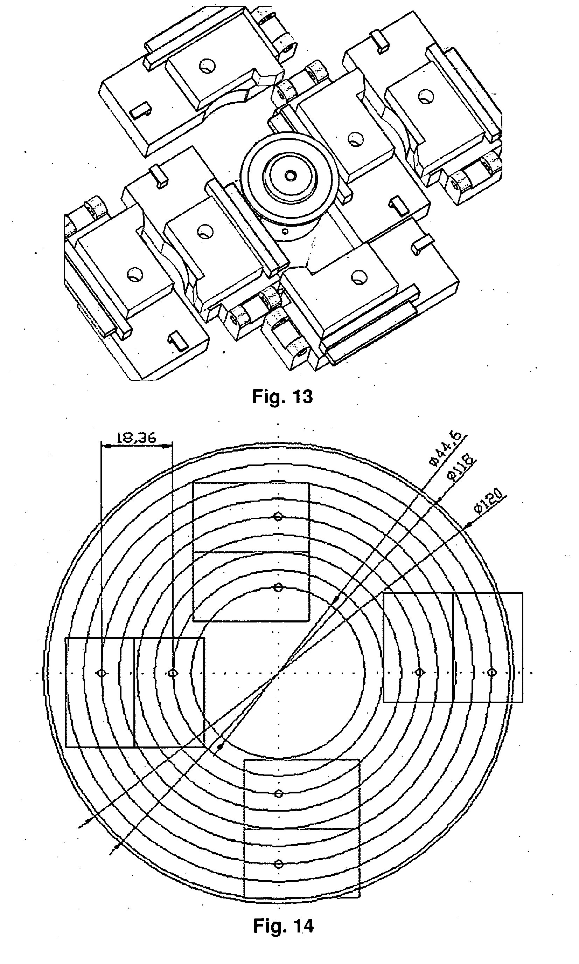

A three-dimensional view of an exemplary arrangement of the six pickups is shown in Fig. 10. A top view of this arrangement is depicted in Fig. 11. In this configuration the neighboring pickups are arranged head to tail. In this way there are no conflicts between the actuators. However, for two of the pickups the phase needs to be reversed. Unfortunately, a plurality of conflicts occur between the different optics bodies, as indicated by the ellipses. In addition, as indicated by the ellipse in Fig. 11, a further conflict arises between the optics body of the innermost pickup and the motor when a standard brushless motor is used. The latter conflict is overcome by using a special motor with a long axle, as depicted in Fig. 12. The conflicts between the different optics bodies are solved by using modified optics bodies as shown in Fig. 13. No modifications of the optical path inside the optics bodies are necessary.

In Fig. 14 an arrangement of eight pickups relative to an optical recording medium is shown schematically. In this arrangement the pitch between the lenses of the different pickups in order to cover the complete data area is 4.59mm. The maximum width of the pickups is 18.36mm. The writing time of a DVD+RW driven at 8X is 1min 15s. The writing time of a DVD+/-R driven at 16X is 37s.

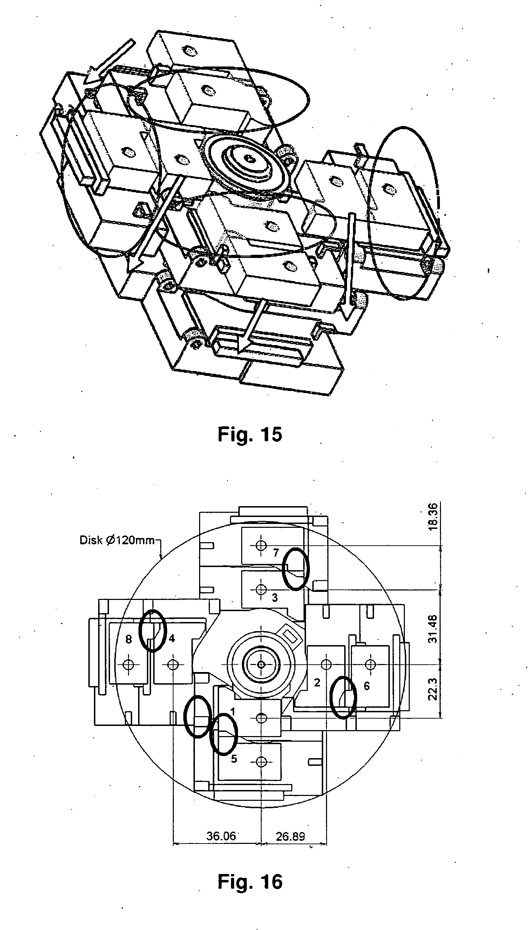

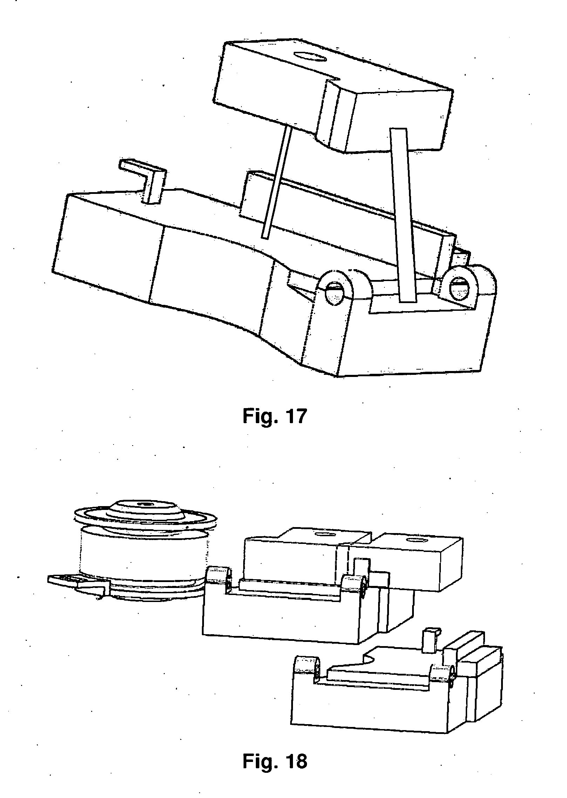

A three-dimensional view of an exemplary arrangement of the eight pickups is shown in Fig. 15. A top view with dimensions of this arrangement is depicted in Fig. 16. In this example the ellipses in Fig. 15 indicate four pickups used in a standard configuration, while the arrows indicate four modified pickups. The main modification, which will be explained below with reference to Figs 17 and 18, consists in moving the optics body about 15mm down, while keeping the position of the actuators. As marked by the ellipses in Fig. 16, despite moving down the optics bodies of four pickups several conflicts between optics bodies and between actuator occur.

The idea behind this arrangement is to separate the actuator and the optical body of the pickup. Before the objective lens of the actuator the light beam passes through a collimating lens on the optics body. Therefore, the light beam is collimated between the optics body and the actuator and a translatory movement of the actuator away from the optics body does not reduce the performance of the pickup.

Fig. 17 shows a three-dimensional view of a pickup with separated optics body and actuator. At the right side of the actuator a flexiboard for the electrical connection of the actuator to the optics body is shown schematically. In the center of the actuator the collimated light beam is indicated. For the separation of the optics body and the actuator a holding element (not shown) is placed between the optics body and the actuator. This holding element has reference surfaces for adjusting the actuator in the X- and Y-direction.

Fig. 18 depicts a three-dimensional view of two adjacent pickups. As can be seen from the figure, by placing the optics bodies on different levels more space is available for the actuators, which can hence be brought very close together. This arrangement is, consequently, especially useful if there isn't enough space to place the whole pickups side by side.

## Claims

1. Apparatus for reading from and/or writing to optical recording media having at least a first pickup and a second pickup for reading from and/or writing to an optical recording medium, each of the first pickup and the second pickup having an optics body remote from the optical recording medium with a collimating lens for collimating a light beam for reading from and/or writing to the optical recording medium and an actuator next to the optical recording medium with an objective lens for focusing the collimated light beam onto the optical recording medium, the first pickup and the second pickup being movable in a movement direction parallel to a surface of the optical recording medium and perpendicular to a track direction of the optical recording medium within a movement range, wherein a width of the optics body in the movement direction is larger than a width of the actuator in the movement direction, the actuators of the first pickup and the second pickup being located on the same level relative to the optical recording medium, **characterized in that** the optics bodies of the first pickup and the second pickup are located on different levels relative to the optical recording medium such that the optics body of the first pickup does not interfere with the optics body of the second pickup within said, movement range.

2. Apparatus according to claim 1, **wherein** at least two pickups, which have the same movement direction and are located on the same side of a motor for rotating the optical recording medium, are arranged head to tail.

3. Apparatus according to claim 1, **wherein** four pickups are arranged crosswise around a motor for rotating the optical recording medium, and wherein the movement direction of one of the four pickups is arranged at an angle of 15° within a plane defined by the four pickups with regard to the movement direction of a pickup arranged on the opposite side of the motor.

## Patentansprüche

1. Vorrichtung zum Lesen von einem optischen Aufzeichnungsmedium und/oder zum Schreiben auf ein optisches Aufzeichnungsmedium, die mindestens einen ersten Aufnehmer und einen zweiten Aufnehmer zum Lesen von einem optischen Aufzeichnungsmedium und/oder zum Schreiben auf ein optisches Aufzeichnungsmedium aufweist, wobei sowohl der erste Aufnehmer als auch der zweite Aufnehmer einen Optikkörper fern von dem optischen Aufzeichnungsmedium mit einer Kollimationslinse zum Kollimieren eines Lichtbündels zum Lesen von dem optischen Aufzeichnungsmedium und/oder zum Schreiben auf das optische Aufzeichnungsmedium und einen Aktuator neben dem optischen Aufzeichnungsmedium mit einer Objektivlinse zum Fokussieren des' kollimierten Lichtstrahls auf das optische Aufzeichnungsmedium aufweist, wobei der erste Aufnehmer und der zweite Aufnehmer in einer Bewegungsrichtung parallel zu einer Oberfläche des optischen Aufzeichnungsmediums und senkrecht zu einer Spurrichtung des optischen Aufzeichnungsmediums innerhalb eines Bewegungsbereichs beweglich sind, wobei eine Breite des Optikkörpers in der Bewegungsrichtung größer als eine Breite des Aktuators in der Bewegungsrichtung ist, wobei sich die Aktuatoren des ersten Aufnehmers und des zweiten Aufnehmers auf derselben Ebene relativ zu dem optischen Aufzeichnungsmedium befinden, **dadurch gekennzeichnet, dass** sich die Optikkörper des ersten Aufnehmers und des zweiten Aufnehmers auf unterschiedlichen Ebenen relativ zu dem optischen Aufzeichnungsmedium befinden, sodass der Optikkörper des ersten Aufnehmers den Optikkörper des zweiten Aufnehmers innerhalb des Bewegungsbereichs nicht stört.

2. Vorrichtung nach Anspruch 1, **bei der** mindestens zwei Aufnehmer, die dieselbe Bewegungsrichtung aufweisen und die sich auf derselben Seite eines Motors zum Drehen des optischen Aufzeichnungsmediums befinden, Kopf an Fuß angeordnet sind.

3. Vorrichtung nach Anspruch 1, **bei der** vier Aufnehmer kreuzweise um einen Motor zum Drehen des optischen Aufzeichnungsmediums angeordnet sind und bei der die Bewegungsrichtung eines der vier Aufnehmer unter einem Winkel von 15° innerhalb einer durch die vier Aufnehmer definierten Ebene in Bezug auf die Bewegungsrichtung eines auf der gegenüberliegenden Seite des Motors angeordneten Aufnehmers angeordnet ist.

## Revendications

1. Appareil de lecture et/ou d'écriture sur des supports d'enregistrement optique présentant au moins un premier capteur et un second capteur pour lire et/ou écrire sur un support d'enregistrement optique, chacun des premier capteur et second capteur disposant d'un corps d'optique situé à distance du support d'enregistrement optique équipé d'une lentille de collimateur pour collimater un faisceau de lumière pour lire et/ou écrire sur le support d'enregistrement optique et un mécanisme d'accès en regard du support d'enregistrement optique équipé d'une lentille de focalisation pour focaliser le faisceau de lumière collimaté sur le support d'enregistrement optique, le premier capteur et le second capteur étant mobiles en un sens de mouvement parallèle à une surface du support d'enregistrement optique et perpendiculaire à un sens de la piste du support d'enregistrement optique dans une amplitude de mouvement, dans lequel une largeur du corps d'optique dans le sens du mouvement est plus importante qu'une largeur du mécanisme d'accès dans le sens du mouvement, les mécanismes d'accès du premier capteur et du second capteur étant situés au même niveau par rapport au support d'enregistrement optique, **caractérisé en ce que** les corps d'optique du premier capteur et du second capteur sont situés à des niveaux différents par rapport au support d'enregistrement optique, de telle manière que le corps d'optique du premier capteur n'interfère pas avec le corps d'optique du second capteur dans une même amplitude de mouvement.

2. Appareil selon la revendication 1, dans lequel au moins deux capteurs, qui ont le même sens de mouvement et sont situés du même côté d'un moteur pour entraîner une rotation du support d'enregistrement optique, sont disposés tête-bêche.

3. Appareil selon la revendication 1, dans lequel quatre capteurs sont disposés transversalement autour d'un moteur pour entraîner une rotation du support d'enregistrement optique, et dans lequel le sens du mouvement de l'un des quatre capteurs est disposé à un angle de 15° sur un plan défini par les quatre capteurs en fonction du sens du mouvement d'un capteur disposé du côté opposé du moteur
